# EUROPEAN PATENT APPLICATION

(11) **EP 3 407 086 A1**
(43) Date of publication of application: **28.11.2018**
(21) Application number: 16886519.4
(22) Date of filing: 21.12.2016
(51) Int. Cl.: G01S 17/87, G01S 17/88, G06M 7/00

(54) **MOBILE OBJECT MEASUREMENT SYSTEM AND METHOD OF DETERMINING NUMBER OF PEOPLE IN MEASUREMENT AREA**

(30) Priority: 18.01.2016 JP 2016007067
(71) Applicant: Hitachi Information & Telecommunication Engineering, Ltd., Kanagawa 220-6122 (JP)
(72) Inventor: SATO, Nobuo, Tokyo 100-8280 (JP); ASAHARA, Akinori, Tokyo 100-8280 (JP)
(74) Representative: Beetz & Partner mbB
(86) International application number: PCT/JP2016/088056
(87) International publication number: WO 2017/126280

(57) **Abstract**

Provided is a technique for reducing erroneous detection by outputting highly reliable results regarding the number of people. A mobile object measurement system of the present disclosure is a system for extracting the number of people on the basis of the measurement results of measurement devices that are arranged in the entire measurement area, and is configured to extract measurement devices that are measuring a predetermined area, extract the number of people present in the predetermined area using a plurality of combinations of measurement devices including some of the extracted devices or a plurality of combinations of measurement devices having different system start times, and perform a voting process for each extracted number of people for each combination so as to determine the most reliable number of people as a correct number of people

## Description

### Technical Field

A particular embodiment of the present application relates to a mobile object measurement system and a method of determining the number of people in a measurement area. For example, an exemplary embodiment relates to a technique for measuring the movements of objects inside or outside a building.

### Background Art

A person detection technique is commonly used that uses a device using an infrared laser beam, a camera, and the like to scan an area around the device, and also uses a device for measuring the position of an object in the area. In addition, a technique for detecting a person by extracting a face area from a camera image, for example, is also used. A method is disclosed (Patent Literature 1) that uses such devices at the same time to detect the presence of a person using a laser beam and that can add, to the obtained position information, information obtained from an image of a camera having captured the person in that position (for example, a personal identification result based on a face).

Meanwhile, as a countermeasure against occlusion that may occur in detection of a person, a method is disclosed (Patent Literature 2) that determines the occurrence of occlusion if the aspect ratio of rectangle information extracted from an image of a person differs in comparison with the size of the person, and counts the number of people on the basis of detected portions of the people (the upper body, the lower body, the right-side body, and the left-side body).

### Citation List

### Patent Literature

Patent Literature 1: JP 2013-156718 A
Patent Literature 2: JP 2012-108785 A

### Summary of Invention

### Technical Problem

According to the technique disclosed in Patent Literature 1, information on a camera video can be added to a highly accurate position determined using a laser beam. However, if measurement with a laser beam fails due to a shielding object or the like, measurement of a person cannot be performed, which is problematic.

Meanwhile, according to the technique disclosed in Patent Literature 2, the influence of occlusion within a measurement device can be removed. However, a countermeasure against occlusion that may occur across a plurality of measurement devices is not taken into consideration, which is problematic.

By the way, when a plurality of measurement devices is used, the trajectories of people are extracted on the basis of the measurement results of the measurement devices (i.e., a tracking function). Therefore, there is a problem in that if a measurement result of one measurement device is erroneous, a measurement result of another measurement device that takes over the measurement result of the one measurement device is influenced and becomes erroneous. Therefore, when a plurality of measurement devices is used, there is a high possibility that occlusion may propagate across the measurement devices. It would be impossible to accurately count the number of people unless such problem is solved.

The present disclosure has been made in view of the foregoing, and provides a technique for reducing erroneous detection by outputting highly reliable results regarding the number of people.

### Solution to Problem

In order to solve the aforementioned problems, a mobile object measurement system in accordance with the present disclosure is provided in advance with a plurality of combinations of measurement devices each configured with at least some of a plurality of measurement devices, and is configured to calculate a candidate number of people that is the number of people corresponding to each of the at least some of the combinations on the basis of measurement data from each of the at least some of the combinations, determine the final number of people on the basis of the candidate number of people, and output the final number of people. More specifically, the system is configured to, for the number of people extracted for each combination, perform a voting process for each combination so as to determine the most reliable number of people as a correct number of people.

Further features related to the present disclosure will become apparent from the description of the specification and the accompanying drawings. In addition, embodiments of the present disclosure can be implemented by elements, a combination of a variety of elements, the following detailed description, and the appended claims.

It should be appreciated that the description of the present specification is only exemplary, and therefore, the scope of claims or examples of the application of the present disclosure should not be limited in any sense.

### Advantageous Effects of Invention

According to the present disclosure, the number of people in a predetermined area can be counted reliably.

### Brief Description of Drawings

Fig. 1 is a diagram illustrating a schematic configuration example of an information management system in accordance with an embodiment of the present disclosure.
Fig. 2 is a sequence diagram illustrating a process of up to confirming, by an operator (US), the period for which people have stayed in a predetermined facility, in an information management system in accordance with this embodiment.
Fig. 3 is a diagram illustrating an exemplary arrangement of base stations in a building in accordance with this embodiment.
Fig. 4 is a chart illustrating an example of an effective area determination table (GSO 102) in accordance with this embodiment.
Fig. 5 is a chart illustrating an example of a base station arrangement list (GSO 103) in accordance with this embodiment.
Fig. 6 is a chart illustrating an example of a trajectory extraction area correspondence table (GSO 104) in accordance with this embodiment.
Fig. 7 is a chart illustrating an example of a measurement condition list (GSO 105) in accordance with this embodiment.
Figs. 8 are diagrams each illustrating a cover area inside a building (which corresponds to the space in Fig. 3) for each measurement condition in an example of the measurement condition list (GSO 105) in Fig. 7.
Fig. 9 is a chart illustrating an example of sensor data detected by each base station arranged (information on a measured object) in this embodiment.
Fig. 10 is a chart illustrating an example of trajectory data generated on the basis of the sensor data in Fig. 9.
Fig. 11 is a chart illustrating an example of a measurement condition candidate list (GSO 108) in accordance with this embodiment.
Fig. 12 is a chart illustrating an example of a list (GSO 109) of the number of measured people for each measurement condition in accordance with this embodiment.
Fig. 13 is a chart illustrating an example of a list (GSO 110) of the number of people for each reliability in accordance with this embodiment.
Fig. 14 is a chart illustrating an example of adjusted trajectory data (GSO 111) in accordance with this embodiment.
Fig. 15 is a flowchart for illustrating a reliable number-of-people and trajectory extraction process executed by a reliable number-of-people and trajectory extraction unit (GSO 4) of a number-of-people and trajectory extraction system (GSO).
Fig. 16 is a chart illustrating an example of a gate list (GSC 401) in accordance with this embodiment.
Fig. 17 is a chart illustrating an example of a display time designation list (GSC 402) in accordance with this embodiment.
Fig. 18 is a chart illustrating an example of a gate passage table (GSC 403) in accordance with this embodiment.
Fig. 19 is a chart illustrating an example of a base station reliability list (GSC 404) in accordance with this embodiment.
Fig. 20 is a flowchart for illustrating a number-of-people and trajectory display process executed by a display unit (GSC 2) of a number-of-people and trajectory display system (GSC) in accordance with this embodiment.

### Description of Embodiments

Conventionally, for counting the number of people in a target area, measurement is performed using measurement data obtained from only a group of base stations (sensors) that can measure the entire area. Therefore, the reliability of the obtained number of people is not high. In this embodiment, the number of people in the target area is counted using both a measurement result that is obtained when all of the base stations of the group arranged in the target area are used, and a measurement result that is obtained when a plurality of combinations of such base stations is used. This is because the count number can differ depending on combinations, and thus it is considered that a more accurate result may be obtained by performing a voting process on the results obtained from the combinations.

Hereinafter, an embodiment of the present disclosure will be described with reference to the accompanying drawings. In the accompanying drawings, elements with the same functions may be denoted by the same reference numerals. Although the accompanying drawings illustrate specific embodiments and implementations in accordance with the principle of the present disclosure, these are only for the understanding of the present disclosure, and should never be used for narrowly construing the present disclosure.

Although the present embodiment will be described in full details for one of ordinary skill in the art to carry out the present disclosure, it should be appreciated that other implementations and embodiments are also possible, and changes in the configuration and structure as well as replacement of a variety of elements is also possible in so far as they are within the spirit and scope of the present disclosure. Thus, the following description should not be construed in a limited way.

Further, as described below, the embodiment of the present disclosure may be implemented by any of software that runs on a general purpose computer, dedicated hardware, or a combination of both.

Although the following description illustrates each information of the present disclosure in a "table" form, such information need not necessarily be represented by a data structure in a table form, and may be represented by other data structures, such as a list, DB, and queue. Therefore, in order to show that each information of the present disclosure does not depend on the data structure, a "table," "list," "DB," "queue," and the like may be simply referred to as "information."

In addition, in describing the content of each information, an expression such as "identification information," "identifier," "name," or "ID" can be used, which are all interchangeable.

In the following, each process in the embodiment of the present disclosure is described as being performed by a "processing unit (a reliable number-of-people and trajectory extraction unit or a display unit)," which is a program, as a subject (a subject that performs an operation). However, as a program is executed by a processor to perform a predetermined process using a memory and a communication port (a communication control device), each process may also be described as being performed by a processor. Further, a process that is disclosed as being performed by a program may also be described as a process performed by a computer, such as a management server, or an information processing device. Some or all of the programs may be implemented by dedicated hardware, or may be implemented as a module(s). A variety of programs may be installed on each computer by a program distribution server or a storage medium.

In addition, in the following embodiment, an information management system that visualizes the period for which people have stayed in a facility is described as an example of a system for measuring people inside or outside a building.

### <Configuration of an information management system>

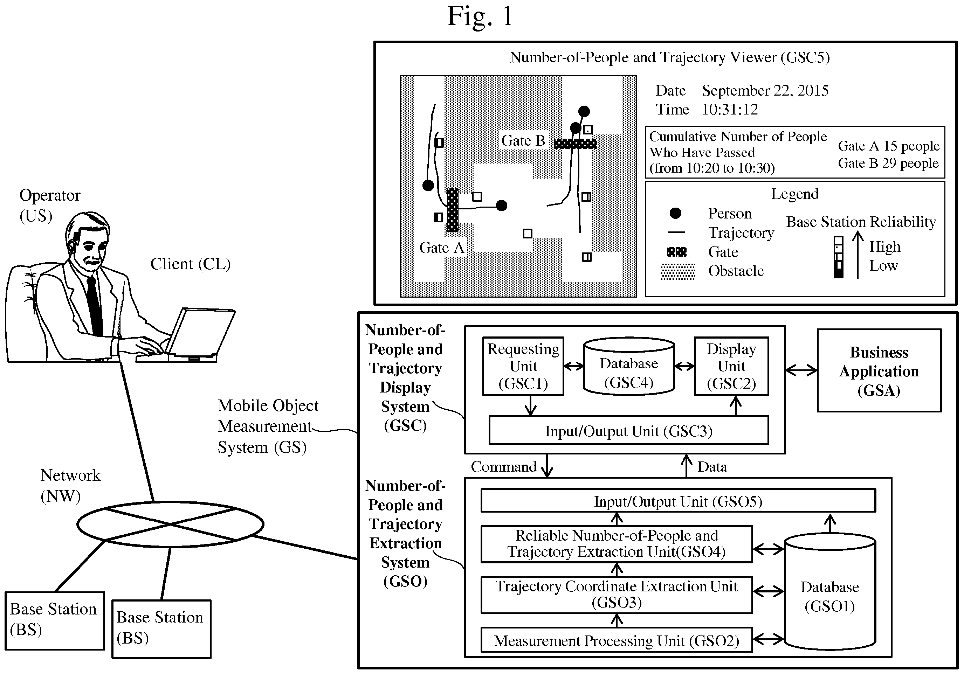

Fig. 1 is a diagram illustrating a schematic configuration example of an information management system in accordance with an embodiment of the present disclosure. The information management system includes a client device (CL) operated by an operator (US), a plurality of base stations (BS), and a mobile object measurement system (GS), which are mutually connected together via a network (NW).

The operator (US) is a manager who checks in which area of a facility and how long people have stayed. The operator (US) here is not necessarily limited to an operator in practice, and may be a person who manages the facility, like a manager or a facility manager, for example. In such a sense, the operator (US) may be simply referred to as a "manager."

The client device (CL) is a terminal configured with a typical computer, for example, and is connected to the mobile object measurement system (GS) via the network (NW) so as to be operated by the operator (US).

The network (NW) connects the client device (CL) and the mobile object measurement system (GS) with the base stations (BS). Such devices and systems are configured such that they can mutually send and receive data or information to/from each other. It should be noted that each base station (BS) is a measurement device that measures people in a facility, and includes a sensor, for example.

The mobile object measurement system (GS) is a trajectory extraction system that aims to visualize if there have been any people staying in a facility, and that can, in addition to detecting people, automatically extract the reliability of the base stations (BS) when detecting people. The mobile object measurement system (GS) includes a number-of-people and trajectory extraction system (GSO), a number-of-people and trajectory display system (GSC), and a business application (GSA).

The number-of-people and trajectory extraction system (GSO) is a system that detects people and extracts the reliability of the detection of the people from sensor data sent from base stations (BS) (for example, information about a period from when signals are emitted until the signals return after being reflected by people and the direction in which reflected waves return). The number-of-people and trajectory extraction system (GSO) is configured with a typical computer, and includes a database (GSO 1), a measurement processing unit (GSO 2), a trajectory coordinate extraction unit (GSO 3), a reliable number-of-people and trajectory extraction unit (GSO 4), and an input/output unit (GSO 5). Each of the measurement processing unit (GSO 2), the trajectory coordinate extraction unit (GSO 3), and the reliable number-of-people and trajectory extraction unit (GSO 4) is configured with a program, for example. Each function corresponding to the program is implemented as the program is read from a memory or storage device (not illustrated) and executed by a CPU (processor) (not illustrated). In addition, the database (GSO 1) is implemented by a storage device. Further, the input/output unit (GSO 5) is an interface that transfers commands or data to/from the number-of-people and trajectory display system (GSC), for example.

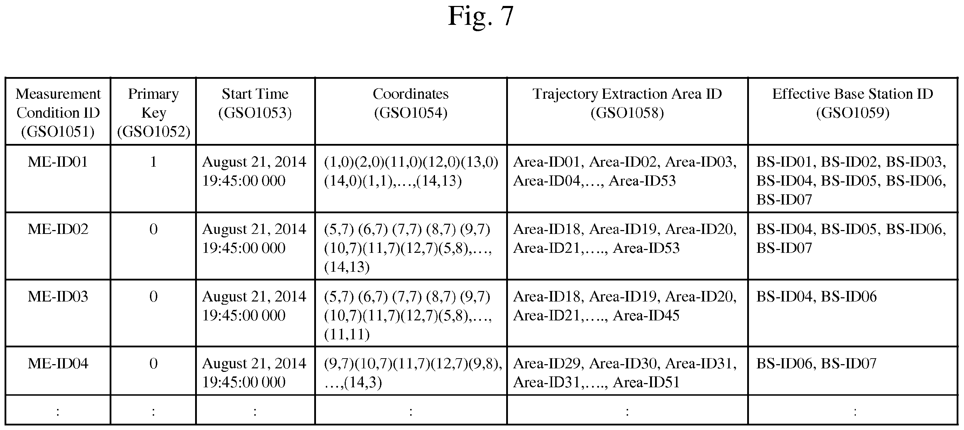

The database (GSO 1) is a database in which data used for the number-of-people and trajectory extraction system (GSO) are collectively managed. The measurement processing unit (GSO 2) processes sensor data (also referred to as measurement data) from base stations (BS) on the basis of a measurement condition list (GSO 105; see Fig. 7). Specifically, the measurement processing unit (GSO 2) extracts measurement data of base stations that matches a condition contained in the measurement condition list (GSO 105). The extracted result is stored in the database (GSO 1). The trajectory coordinate extraction unit (GSO 3) performs a process of determining the coordinates at which a person has stayed from the measurement data extracted by the measurement processing unit (GSO 2). The calculated coordinate values are stored in the database (GSO 1). The reliable number-of-people and trajectory extraction unit (GSO 4) performs a process of determining the reliability from a plurality of measurement results (measurement data) (through a voting process described below), and determining the coordinates at which a person has stayed using a highly reliable measurement result. Highly reliable coordinate values are stored in the database (GSO 1). The input/output unit (GSO 5) manages the input and output of the number-of-people and trajectory extraction system (GSO). In particular, the input/output unit (GSO 5) performs a process of outputting data in response to a command sent from the number-of-people and trajectory display system (GSC).

The number-of-people and trajectory display system (GSC) is configured with a typical computer. The number-of-people and trajectory display system (GSC) is a system that sends a request from the client device (CL) to the number-of-people and trajectory extraction system (GSO) and displays results, and includes a requesting unit (GSC 1), a display unit (GSC 2), an input/output unit (GSC 3), and a database (GSC 4). Each of the requesting unit (GSC 1) and the display unit (GSC 2) is configured with a program, for example, and each function corresponding to the program is implemented as the program is read from a memory or storage device (not illustrated) and executed by a CPU (processor) (not illustrated). The database (GSC 4) is implemented by a storage device. In addition, the input/output unit (GSC 3) is an interface that transfers commands or data to/from the number-of-people and trajectory extraction system (GSO), for example.

The requesting unit (GSC 1) receives a request from the client device (CL), and sends it to the number-of-people and trajectory extraction system (GSO). The display unit (GSC 2) performs a process of extracting a feature quantity that is needed for display, from the results sent from the number-of-people and trajectory extraction system (GSO) as well as the information stored in the database (GSC 4), and a process of generating a display screen. The input/output unit (GSC 3) manages the input and output of the number-of-people and trajectory display system (GSC).

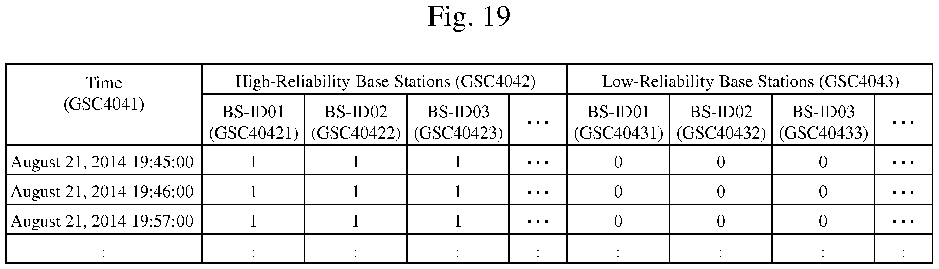

A number-of-people and trajectory viewer (GSC 5) illustrates an example of the results output from the input/output unit (GSC 3). The number-of-people and trajectory viewer (GSC 5) includes, as the display items, a target area (e.g., a room or space) in which the number of people is to be counted, the date and time designated by the administrator (US), the cumulative number of people (a total number of people) who have passed in the period designated by the administrator (US), and the base station reliability (see Fig. 19), for example. Herein, the base station reliability is information indicating the reliability of the base stations in the designated period, and indicates, for example, the proportion of the base stations that have been determined to be highly reliable among all the base stations (BS). Besides, it is also possible to list the IDs of all the base stations and indicate the base stations that have been determined to be highly reliable.

The business application (GSA) performs a process of cooperating with other business applications, such as an operating system or a signage system, for example.

It should be noted that the number-of-people and trajectory extraction system (GSO) and the number-of-people and trajectory display system (GSC) may be implemented by either a single computer or separate computers.

### <Process sequence>

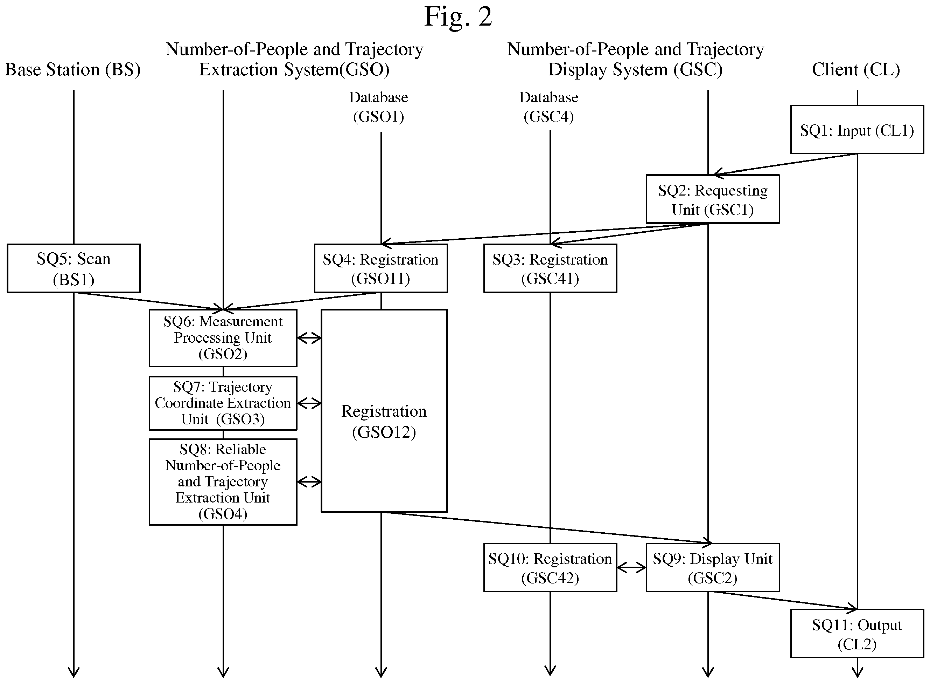

Fig. 2 is a sequence diagram illustrating a process of up to confirming, by the operator (US), the period for which people have stayed in a predetermined facility, in the information management system in accordance with this embodiment. The sequence diagram shows a sequence of the processes of the base station (BS), the number-of-people and trajectory extraction system (GSO), the number-of-people and trajectory display system (GSC), and the client device (CL).

### (i) Sequence 1: input (CL1)

The operator (US) designates the place, time, and period in which people (the number of people) in a predetermined facility are to be confirmed, using the client device (CL). The client device (CL) sends the results of the designation (input requests) to the requesting unit (GSC 1) of the number-of-people and trajectory display system (GSC).

### (ii) Sequence 2: requesting unit (GSC 1)

The requesting unit (GSC 1), upon receiving the instructions (requests) from the client device (CL), classifies them into requests (commands) related to display and requests (commands or conditions) related to measurement, and sends the requests to the database (GSC 4) and the database (GSO 1), respectively.

### (iii) Sequence 3: database (GSC 4)

The requests related to display from the requesting unit (GSC 1) are stored in the database (GSC 4) (registration (GSC 41)). Accordingly, information about what type of request has been issued by the client (CL) (history of requests) can be stored in the database and thus managed.

### (iv) Sequence 4: database (GSO 1)

The requests related to measurement from the requesting unit (GSC 1) are stored in the database (GSO 1) (registration (GSO 11)). The conditions included in the requests are, for example, information for identifying the measurement start date and time, scan speed, scan frequency, and measurement range (scan range).

### (v) Sequence 5: base station (BS)

The base station (BS) acquires from the mobile object measurement system (GS) the conditions registered in the registration (GSC 11), and scans the space on the basis of the conditions (scan (BS1)).

### (vi) Sequence 6: measurement processing unit (GSO 2)

The measurement processing unit (GSO 2) identifies an effective base station (BS) from sensor data obtained from each base station (BS) through the scanning (BS1) on the basis of the measurement condition list (GSO 105), and determines the measurement data of which base stations (BS) should be used (extraction of base stations). The results are registered in the database (GSO 1) (registration (GSO 12)).

### (vii) Sequence 7: trajectory coordinate extraction unit (GSO 3)

The trajectory coordinate extraction unit (GSO 3) performs a process of determining the coordinates at which a person has stayed from the measurement data of the base stations (BS) identified by the measurement processing unit (GSO 2). The results are registered in the database (GSO 1) (registration (GSO 12)).

### (viii) Sequence 8: reliable number-of-people and trajectory extraction unit (GSO 4)

The reliable number-of-people and trajectory extraction unit (GSO 4) executes a voting process using a plurality of measurement results (measurement data obtained under the measurement condition of the primary key described below and other measurement conditions), and determines the reliability of the measurement data. In addition, the reliable number-of-people and trajectory extraction unit (GSO 4) performs a process of determining the coordinates at which a person has stayed using highly reliable measurement results. The results are registered in the database (GSO 1) (registration (GSO 12)).

### (ix) Sequence 9: display unit (GSC 2)

The display unit (GSC 2) performs a process of generating a display screen using the results sent from the number-of-people and trajectory extraction system (GSO) as well as the data registered in the database (GSC 4) that stores a feature quantity needed for display (registration (GSC 41)), and sends data on the display screen to the client (CL) and the database (GSC 4).

### (x) Sequence 10: database (GSC 4)

The data on the generated display screen is registered in the database (GSC 4) (registration (GSC 42)).

### (xi) Sequence 11: client (CL)

The client device (CL) receives from the mobile object measurement system (GS) the data on the display screen generated by the display unit (GSC 2), and displays it on the display screen of the client device (CL) (output (CL 2)).

### <Arrangement of base stations>

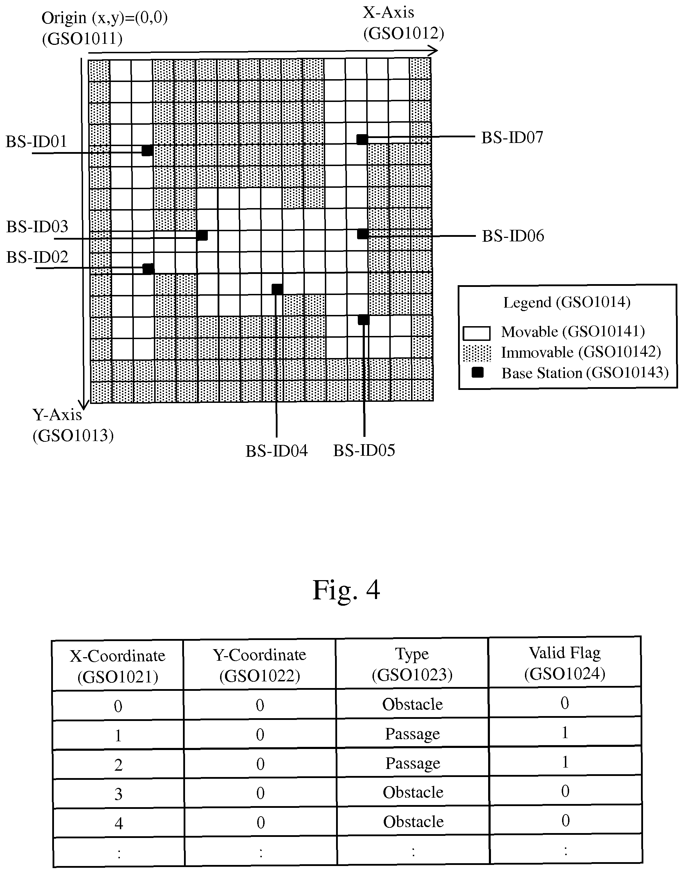

Fig. 3 is a diagram illustrating an exemplary arrangement of base stations in a building in accordance with this embodiment. A map (GSO 101) in Fig. 3 is an example for clarifying the relationship among internal structures of the building.

In the map (GSO 101), the upper left point is set as the origin (0,0) (GSO 1011), and representation on the map is based on (X-coordinate, Y-coordinate). The value of the X-coordinate (GSO 1012) increases to the right, and the value of the Y-coordinate (GSO 1013) increases down.

The area of the map (GSO 101) can be classified into a space where people can move and a space where people cannot move, and this can be displayed as seen in the legend (GSO 1014). Further, such spaces can be represented in color, and the space where people can move may be indicated as "Movable" (GSO 10141), while the space where people cannot move may be indicated as "Immovable" (GSO 10142).

In the map (GSO 101), a plurality of base stations BS-ID 01 to BS-ID 07 is arranged so as to be able to cover (scan) the entire range of the "Movable" (GSO 10141) spaces in the building. For example, the BS-ID 01 is arranged at the coordinates (2,4), the BS-ID 02 is arranged at the coordinates (2,9), the BS-ID 03 is arranged at the coordinates (5,8), the BS-ID 04 is arranged at the coordinates (8,10), the BS-ID 05 is arranged at the coordinates (12,12), the BS-ID 06 is arranged at the coordinates (12,8), and the BS-ID 07 is arranged at the coordinates (12,3). In addition, the BS-ID 01 covers an area surrounded by the coordinates (1,0), (2,0), (1,7), and (2,7), the BS-ID 02 covers an area surrounded by the coordinates (1,6), (2,6), (2,8), (6,8), (6,9), (2,9), (2,13), and (1,13), the BS-ID 03 covers an area surrounded by the coordinates (1,8), (5,8), (5,6), (8,6), (8,11), (5,11), (5,9), and (1,9), the BS-ID 04 covers an area surrounded by the coordinates (5,7), (12,7), (12,10), (8,10), (8,11), and (5,11), the BS-ID 05 covers an area surrounded by the coordinates (9,8), (12,8), (12,12), (14,12), (14,13), (11,13), (11,10), and (9,10), the BS-ID 06 covers an area surrounded by the coordinates (9,7), (11,7), (11,4), (12,4), (12,11), (11,11), (11,10), and (9,10), and the BS-ID 07 covers an area surrounded by the coordinates (11,0), (14,0), (14,3), (12,3), (12,7), and (11,7).

It should be noted that the map (GSO 101) is stored in the database (GSO 1). Alternatively, the map (GSO 101) may be used as a background image of the number-of-people and trajectory viewer (GSC 5).

### <Information on effective area determination>

Fig. 4 is a chart illustrating an example of an effective area determination table (GSO 102) in accordance with this embodiment. Information on the effective area determination table (GSO 102) is generated corresponding to Fig. 3. The map (GSO 101) (see Fig. 3) shows the internal structures of a building, but in order to determine a trajectory in practice, the presence or absence of a movement should be determined in units of coordinates. Information on the effective area determination table (GSO 102) is an example of such information collected as a correspondence table. The map (GSO 101) corresponds one-to-one to the effective area determination table (GSO 102).

The effective area determination table (GSO 102) includes, as the constituent information, the X-coordinate (GSO 1021), the Y-coordinate (GSO 1022), the type (GSO 1023), and the valid flag (GSO 1024). The X-coordinate (GSO 1021) indicates the X-coordinate on the map (GSO 101). The Y-coordinate (GSO 1022) indicates the Y-coordinate on the map (GSO 101). The type (GSO 1023) is the type of a corresponding area in the map (GSO 101), and indicates an object actually arranged thereon. For example, obstacles, such as shelves or walls, or passages are described. The valid flag (GSO 1024) indicates whether the relevant object is movable or not. Specifically, 0 indicates that the object is immovable, and 1 indicates that the object is movable.

It should be noted that data on the effective area determination table (GSO 102) is stored in the database (GSO 1). In addition, data that is necessary to indicate the relationship between the map (GSO 101) and the coordinates may be added, if any.

### <Base station arrangement list>

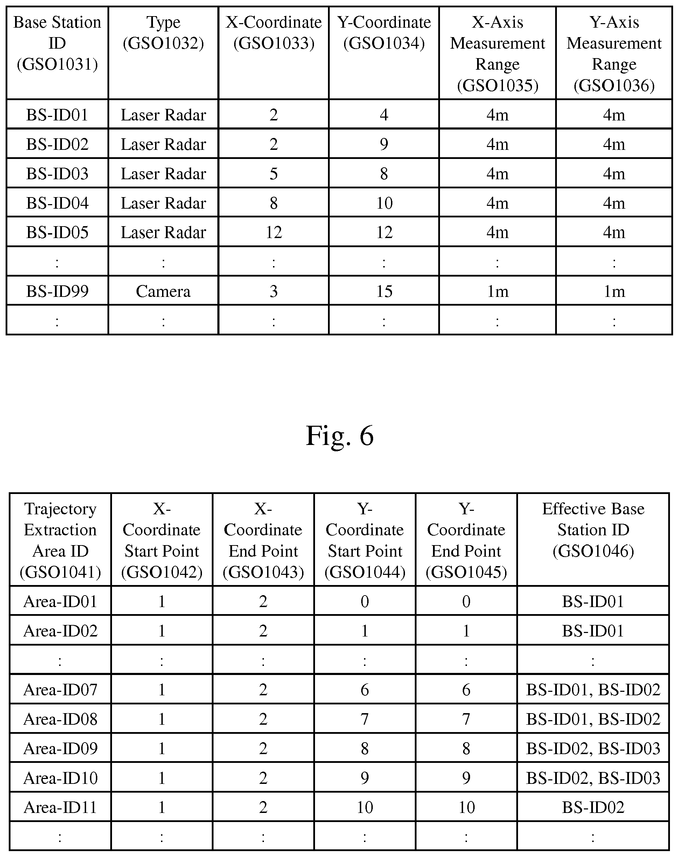

Fig. 5 is a chart illustrating an example of the base station arrangement list (GSO 103) in accordance with this embodiment. Information for representing the base stations (BS) for measuring the movements or trajectories of people on the map (GSO 101) is necessary. The base station arrangement list (GSO 103) in Fig. 5 is an example of such information collected as a list.

The base station arrangement list (GSO 103) includes, as the constituent information related to a plurality of base stations, the base station ID (GSO 1031), the type (GSO 1032), the X-coordinate (GSO 1033), the Y-coordinate (GSO 1034), the X-axis measurement range (GSO 1035), and the Y-axis measurement range (GSO 1036).

The base station ID (GSO 1031) is identification information for uniquely identifying a base station. The type (GSO 1032) is the type of a sensor used for the base station. Examples of the type include a laser radar, camera, and stereo camera. The X-coordinate (GSO 1033) is information indicating the X-coordinate of the position at which the relevant base station is arranged. The X-coordinate corresponds to the value of the map (GSO 101). The Y-coordinate (GSO 1034) is information indicating the Y-coordinate of the position at which the relevant base station is arranged. The Y-coordinate corresponds to the value of the map (GSO 101). The X-axis measurement range (GSO 1035) indicates the range of the X-axis in which the relevant base station can perform measurement under a circumstance in which there are no obstacles around the base station. As such a range, the value of a radius that surrounds the X-coordinate (GSO 1033) as the center is stored. The Y-axis measurement range (GSO 1036) indicates the range of the Y-axis in which the relevant base station can perform measurement under a circumstance in which there are no obstacles around the base station. As such a range, the value of a radius that surrounds the Y-coordinate (GSO 1034) as the center is stored.

It should be noted that data on the base station arrangement list (GSO 103) is stored in the database (GSO 1). In addition, data that is necessary to indicate the relationship between the map (GSO 101) and information on the base stations may be added, if any.

### <Trajectory extraction area correspondence table>

Fig. 6 is a chart illustrating an example of a trajectory extraction area correspondence table (GSO 104) in accordance with this embodiment. Using a correspondence table between the coordinates of a detected object and its corresponding measurement area is efficient as it is only necessary to modify the correspondence table when the resolution of the measurement area is changed. The trajectory extraction area correspondence table (GSO 104) in Fig. 6 is an example of such a list.

The trajectory extraction area correspondence table (GSO 104) includes, as the constituent information, the trajectory extraction area ID (GSO 1401), the X-coordinate start point (GSO 1042), the X-coordinate end point (GSO 1043), the Y-coordinate start point (GSO 1044), the Y-coordinate end point (GSO 1045), and the effective base station ID (GSO 1046).

The trajectory extraction area ID (GSO 1041) indicates identification information for uniquely identifying an area where an object was detected. The measurement area can be represented by four coordinates, and the trajectory extraction area correspondence table (GSO 104) uses the X-coordinate start point (GSO 1042), the X-coordinate end point (GSO 1043), the Y-coordinate start point (GSO 1044), and the Y-coordinate end point (GSO 1045). As the effective base station ID (GSO 1046), the ID of a base station that can detect the relevant trajectory extraction area is stored.

Ideally, the trajectory extraction area correspondence table (GSO 104) has no overlap in the measurement areas represented by the table.

It should be noted that data on the trajectory extraction area correspondence table (GSO 104) is stored in the database (GSO 1). In addition, data that is necessary to indicate the relationship between the coordinates of a detected object and its corresponding measurement area may be added, if any.

### <Measurement condition list>

Fig. 7 is a chart illustrating an example of the measurement condition list (GSO 105) in accordance with this embodiment. Collecting conditions under which measurement can be performed with one or more base stations can facilitate management. The measurement condition list (GSO 105) in Fig. 7 is an example of a list of such measurement conditions.

The measurement condition list (GSO 105) includes, as the constituent information, the measurement condition ID (GSO 1051), the primary key (GSO 1052), the start time (GSO 1053), the coordinates (GSO 1054), the trajectory extraction area ID (GSO 1058), and the effective base station ID (GSO 1059).

The measurement condition ID (GSO 1051) is identification information for uniquely identifying a measurement condition. The primary key (GSO 1052) is a key used to identify the primary measurement condition among a number of measurement conditions. For the primary key, 1 is stored, and for the other keys, 0 is stored. For example, one primary key (GSO 1052) is set for a measurement target room or a closed space (the room or space illustrated in Fig. 3). The start time (GSO 1053) is information indicating the time when measurement was started.

The coordinates (GSO 1054) are information indicating the coordinate values of a measurement area in which measurement can be performed under the relevant measurement condition. The measurement area can be represented by four coordinates. Herein, from the trajectory extraction area correspondence table (GSO 104), the X-coordinate start point (GSO 1042), the X-coordinate end point (GSO 1043), the Y-coordinate start point (GSO 1044), and the Y-coordinate end point (GSO 1045) are used to represent the measurement area.

The trajectory extraction area ID (GSO 1058) indicates identification information for uniquely identifying a trajectory extraction area in which detection can be performed in accordance with the measurement condition of the relevant measurement condition ID. The effective base station ID (GSO 1059) is the ID of a base station that can detect an area indicated by the trajectory extraction area ID (GSO 1058).

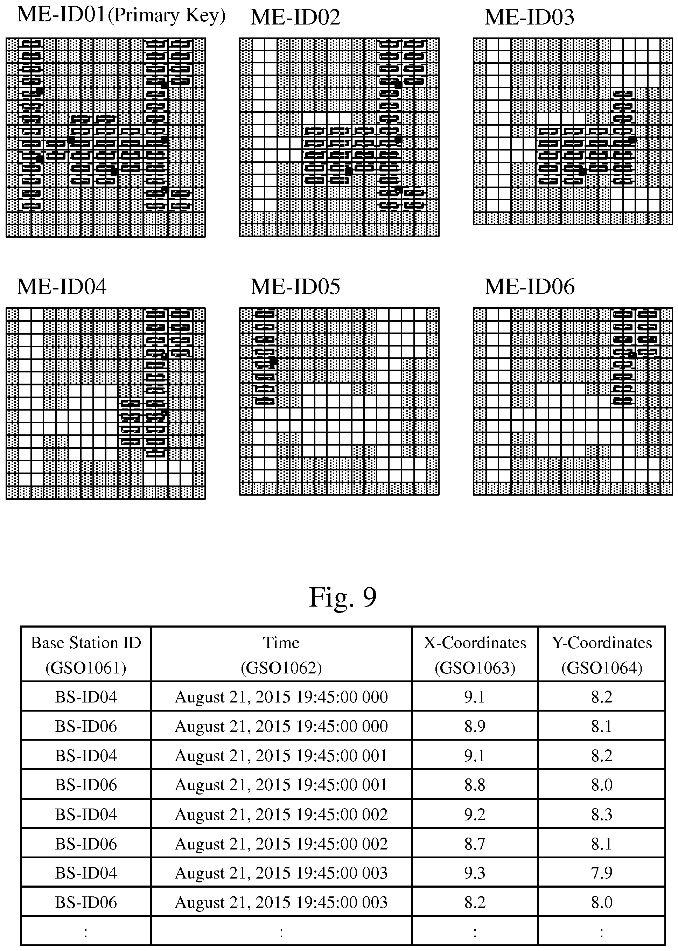

Figs. 8 are diagrams each illustrating a cover area inside a building (which corresponds to the space in Fig. 3) for each measurement condition in an example of the measurement condition list (GSO 105) in Fig. 7. An area represented by each key corresponds to an area indicated by the coordinates (GSO 1054) of the measurement condition list (GSO 105).

ME-ID 01 is the measurement condition of the primary key, and covers the entire area inside the building. That is, using each base station indicated by the effective base station ID (GSO 1059), which is included in the measurement condition of the primary key, can scan the entire area in the building. The other keys that are ME-ID 02 to ME-ID 06 cover only some areas in the building.

It should be noted that data on the measurement condition list (GSO 105) is stored in the database (GSO 1). Data that is necessary to identify a plurality of measurement conditions may be added, if any.

### <Example of sensor data>

Fig. 9 is a chart illustrating an example of sensor data detected by each base station arranged (information on a measured object) in this embodiment.

The sensor data (GSO 106) includes, as the constituent information, the base station ID (GSO 1061), the time (GSO 1062), the X-coordinate (GSO 1063), and the Y-coordinate (GSO 1064). The sensor data (GSO 106) acquired from a base station is, in practice, the distance from the base station to an object, and the angle (direction) thereof. For example, the measurement processing unit (GSO 2) converts information on the distance and angle into coordinates.

The base station ID (GSO 1061) is identification information for uniquely identifying a base station that sent the sensor data (GSO 106). The time (GSO 1062) is the time when the sensor data was received from the relevant base station. The X-coordinate (GSO 1063) indicates the coordinate value of the object on the X-axis. The Y-coordinate (GSO 1064) indicates the coordinate value of the object on the Y-axis.

It should be noted that the sensor data (GSO 106) is stored in the database (GSO 1). In addition, the sensor data (GSO 106) may have added thereto data that is necessary to indicate the relationship between the object and the base station that detects the object, if any.

### <Example of trajectory data>

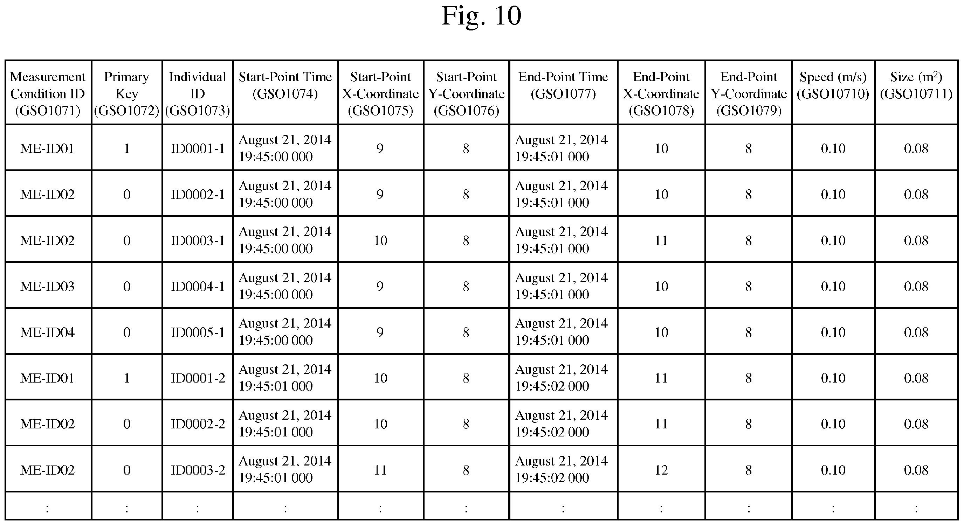

Fig. 10 is a chart illustrating an example of trajectory data generated on the basis of the sensor data in Fig. 9. A flow of generating trajectory data (GSO 107) from the sensor data (GSO 106) is briefly described below. First, the trajectory coordinate extraction unit (GSO 3) extracts an object (person) from sensor data (Fig. 9) from a base station with the effective base station ID (GSO 1059) contained in the measurement condition list (GSO 105) as the measurement condition ID (GSO 1051) (i.e., determines the center coordinates and size of the object). Then, the trajectory coordinate extraction unit (GSO 3) calculates the trajectory of the detected object from a change in the movement thereof within a predetermined period (i.e., determines the center coordinates, size, and speed of the object). The calculated trajectory of the object is stored as the trajectory data (GSO 107). It should be noted that in the example of Fig. 10, the trajectories of two objects are extracted for the measurement condition ME-ID 02 and the trajectory of one object is extracted for each of the other measurement conditions at each time (a start time of 19:45:00 000 in August 21, 2014 and 19:45:01 000 of the same date).

The trajectory data (GSO 107) includes, as the constituent information, the measurement condition ID (GSO 1071), the primary key (GSO 1072), the individual ID (GSO 1073), the start-point time (GSO 1074), the start-point X-coordinate (GSO 1075), the start-point Y-coordinate (GSO 1076), the end-point time (GSO 1077), the end-point X-coordinate (GSO 1078), the end-point Y-coordinate (GSO 1079), the speed (m/s) (GSO 10710), and the size (GSO 10711).

The measurement condition ID (GSO 1071) is identification information for uniquely identifying a measurement condition indicated by the measurement condition ID (GSO 1051). The primary key (GSO 1072) is information for identifying the primary measurement condition indicated by the primary key (GSO 1052). The individual ID (GSO 1073) is identification information for uniquely identifying an object. The start-point time (GSO 1074) is the time when detection of the object was started. The start-point X-coordinate (GSO 1075) is the coordinate value of the object on the X-axis when detection thereof was started. The start-point Y-coordinate (GSO 1076) is the coordinate value of the object on the Y-axis when detection thereof was started. The end-point time (GSO 1077) is the time when detection of the object ended. The end-point X-coordinate (GSO 1078) is the coordinate value of the object on the X-axis when detection thereof ended. The end-point Y-coordinate (GSO 1079) is the coordinate value of the object on the Y-axis when detection thereof ended. The speed (m/s) (GSO 10710) is the attribute data on the object, and is the value of the speed of the object. The size (m²) (GSO 10711) is the attribute data on the object, and is the value of the size of the object.

The data is stored in the database (GSO 1). The trajectory data (GSO 107) may have added thereto data that is necessary to indicate information related to the detected objects, if any.

### <Example of a measurement condition candidate list>

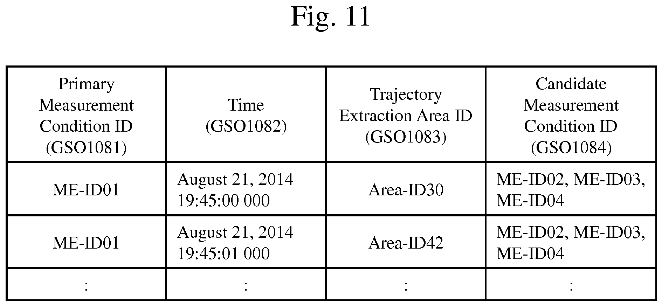

Fig. 11 is a chart illustrating an example of a measurement condition candidate list (GSO 108) in accordance with this embodiment. In the measurement condition candidate list (GSO 108), information, which is obtained by deriving the trajectory extraction area ID (GSO 1041) from the coordinates of an object extracted using the primary key (GSO 1072) of the trajectory data (GSO 107), and extracting a plurality of measurement conditions that support the extraction area, is stored. The measurement condition candidate list (GSO 108) is necessary to analyze the number of detected objects using a plurality of measurement conditions.

The measurement condition candidate list (GSO 108) includes, as the constituent information, the primary measurement condition ID (GSO 1081), the time (GSO 1082), the trajectory extraction area ID (GSO 1083), and the candidate measurement condition ID (GSO 1084).

The primary measurement condition ID (GSO 1081) is information for identifying the measurement condition ID (GSO 1071) of the primary key (GSO 1072) among the trajectory data (GSO 107) (see FIG. 10). The time (GSO 1082) is information indicating the time when an object, which was output corresponding to the primary measurement condition ID (GSO 1081), was detected among the acquired trajectory data (GSO 107).

The trajectory extraction area ID (GSO 1083) is information indicating the trajectory extraction area ID (GSO 1041) of the measurement area included in four coordinates that are the X-coordinate start point (GSO 1042), the X-coordinate end point (GSO 1043), the Y-coordinate start point (GSO 1044), and the Y-coordinate end point (GSO 1045) in the trajectory extraction area correspondence table (GSO 104) (see Fig. 6) identified using the values of the start-point X-coordinate (GSO 1075), the start-point Y-coordinate (GSO 1076), the end-point X-coordinate (GSO 1078), and the end-point Y-coordinate (GSO 1079) of the measurement condition ID (GSO 1071) of the primary key (GSO 1072) in the trajectory data (GSO 107).

The candidate measurement condition ID (GSO 1084) is information for identifying measurement conditions under which an area indicated by the trajectory extraction area ID (GSO 1083) can be measured.

It should be noted that data on the measurement condition candidate list (GSO 108) is stored in the database (GSO 1). In addition, the measurement condition candidate list (GSO 108) may have added thereto data that is necessary to indicate information related to cooperation of a plurality of measurement conditions, if any.

### <Example of a list of the number of measured people for each measurement condition>

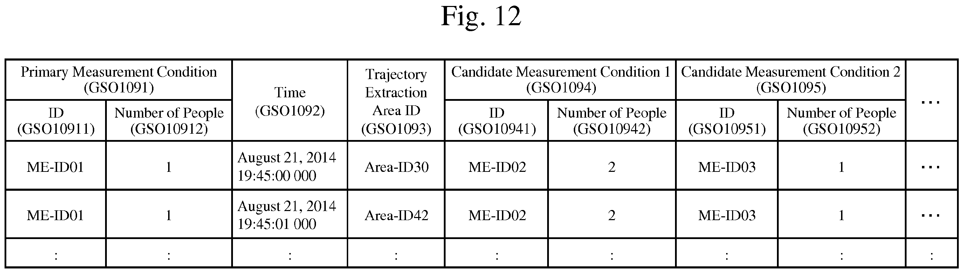

Fig. 12 is a chart illustrating an example of a list (GSO 109) of the number of measured people for each measurement condition in accordance with this embodiment. The list (GSO 109) of the number of measured people for each measurement condition is a list for storing a result obtained by determining the number of people for each of measurement conditions and measurement areas determined from the measurement condition candidate list (GSO 108).

The list (GSO 109) of the number of measured people for each measurement condition includes, as the constituent information, the primary measurement condition (GSO 1091), the time (GSO 1092), the trajectory extraction area ID (GSO 1093), and a plurality of candidate measurement conditions (a candidate measurement condition 1 (GSO 1094), a candidate measurement condition 2 (GSO 1095), ..., and a candidate measurement condition *k* (GSO 109k), where *k* is an integer of 1 to *n*).

The primary measurement condition (GSO 1091) is the measurement condition of the primary key, and indicates the ID (GSO 10911) for identifying the measurement condition, and the number of people (GSO 10912) determined under the measurement condition of the primary key. The time (GSO 1092) is the time when the object was detected. The trajectory extraction area ID (GSO 1093) is the trajectory extraction area ID (GSO 1083) determined from the measurement condition candidate list (GSO 108).

The plurality of candidate measurement conditions is information for identifying each candidate measurement condition, and information indicating the number of people determined under the measurement condition. For example, the candidate measurement condition 1 (GSO 1094) indicates the first measurement condition, and its measurement condition ID is stored in the field of the ID (GSO 10941), while the number of people determined under the measurement condition 1 is stored in the field of the number of people (GSO 10942). This is the same for the candidate measurement condition 2 (GSO 1095) and the candidate measurement condition *k* (GSO 109k). The number of candidate measurement conditions is equal to the number of measurement conditions stored as the candidate measurement condition ID (GSO 1084) (see Fig. 11).

It should be noted that data on the list (GSO 109) of the number of measured people for each measurement condition is stored in the database (GSO 1). In addition, the list (GSO 109) of the number of measured people for each measurement condition may have added thereto data that is necessary to indicate information related to the results of the plurality of measurement conditions, if any.

### <Example of a list of the number of people for each reliability>

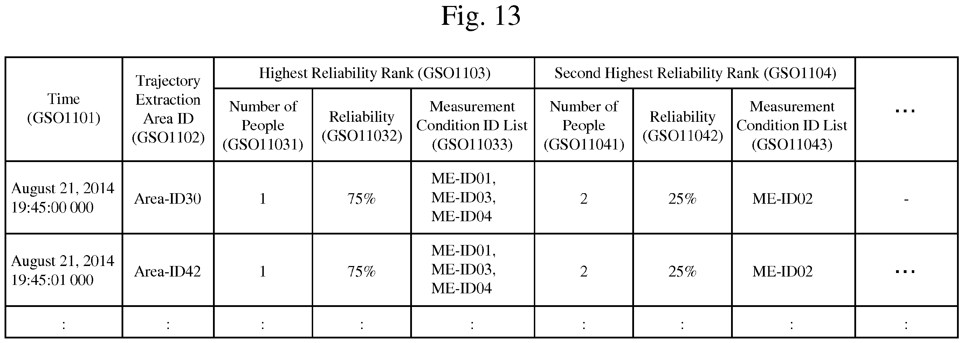

Fig. 13 is a chart illustrating an example of a list (GSO 110) of the number of people for each reliability in accordance with this embodiment. In the list (GSO 109) of the number of measured people for each measurement condition, the number of people is determined for each measurement condition. Herein, determining the reliability from the number of people can obtain an extraction result with high accuracy. In this embodiment, the list (GSO 110) of the number of people for each reliability is generated from the list (GSO 109) of the number of measured people for each measurement condition (Fig. 12), so that the reliability of each number of people is collected.

The list (GSO 110) of the number of people for each reliability includes, as the constituent information, the time (GSO 1101), the trajectory extraction area ID (GSO 1102), and the reliability rank (the highest reliability rank (GSO 1103), the second highest reliability rank (GSO 1104), ...).

The reliability is obtained by voting for measurement conditions with the same number of people in the list (GSO 109) of the number of measured people for each measurement condition (see Fig. 12). Accordingly, the "number of people" with the largest number of votes indicates information on the most reliable number of people.

The time (GSO 1101) is the time when the object was detected. The trajectory extraction area ID (GSO 1102) is the trajectory extraction area ID (GSO 1083) determined from the measurement condition candidate list (GSO 108).

The highest reliability rank (GSO 1103) is the detailed information on the number of people with the largest number of votes. Herein, the number of people (GSO 11031) indicates the number of people, the reliability (GSO 11032) indicates the percentage of votes for the number of people with the highest reliability out of the total votes, and the measurement condition ID list (GSO 11033) indicates the IDs of the measurement conditions determined at that time. The second highest reliability rank (GSO 1104) is the detailed information on the number of people with the second largest number of votes.

In the list (GSO 110) of the number of people for each reliability, columns in a number corresponding to the extracted "number of people" are generated.

It should be noted that data on the list (GSO 110) of the number of people for each reliability is stored in the database (GSO 1). In addition, the list (GSO 110) of the number of people for each reliability may have added thereto data that is necessary to indicate information related to the number of people for each reliability, if any.

### <Example of adjusted trajectory data>

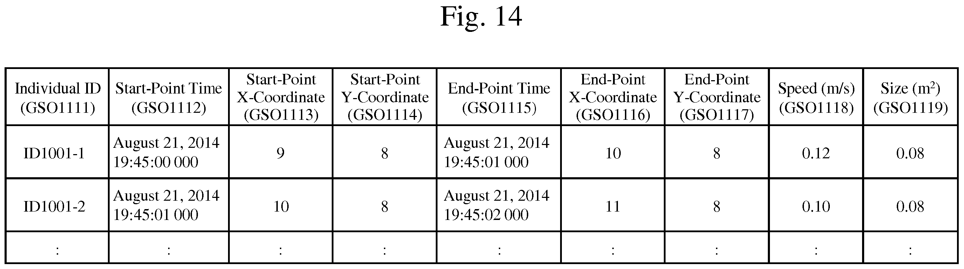

Fig. 14 is a chart illustrating an example of adjusted trajectory data (GSO 111) in accordance with this embodiment. The adjusted trajectory data (GSO 111) indicates trajectory data determined using the most reliable result from the list (GSO 110) of the number of people for each reliability.

For the adjusted trajectory data (GSO 111), if there is only one most reliable result, the data is stored as the adjusted trajectory data (GSO 111). Meanwhile, if there is a plurality of most reliable results (if the numbers of votes are the same), a representative result may be selected and stored, or the average value thereof may be stored.

The individual ID (GSO 1111) is information for identifying a detection target object. The time (GSO 1112) indicates the time when the object was detected.

The start-point X-coordinate (GSO 1113) is the coordinate value of the object on the X-axis at the start point of the trajectory. The start-point Y-coordinate (GSO 1114) is the coordinate value of the object on the Y-axis at the start point of the trajectory. The end-point X-coordinate (GSO 1116) is the coordinate value of the object on the X-axis at the end point of the trajectory. The end-point Y-coordinate (GSO 1117) is the coordinate value of the object on the Y-axis at the end point of the trajectory.

The speed (m/s) (GSO 1118) is the attribute data on the object, and is the value of the speed of the object. The size (m²) (GSO 1119) is the attribute data on the object, and is the value of the size of the object.

It should be noted that the adjusted trajectory data (GSO 111) is stored in the database (GSO 1). In addition, the adjusted trajectory data (GSO 111) may have added thereto data that is necessary to indicate information related to the detected objects, if any.

### <Reliable number-of-people and trajectory extraction process>

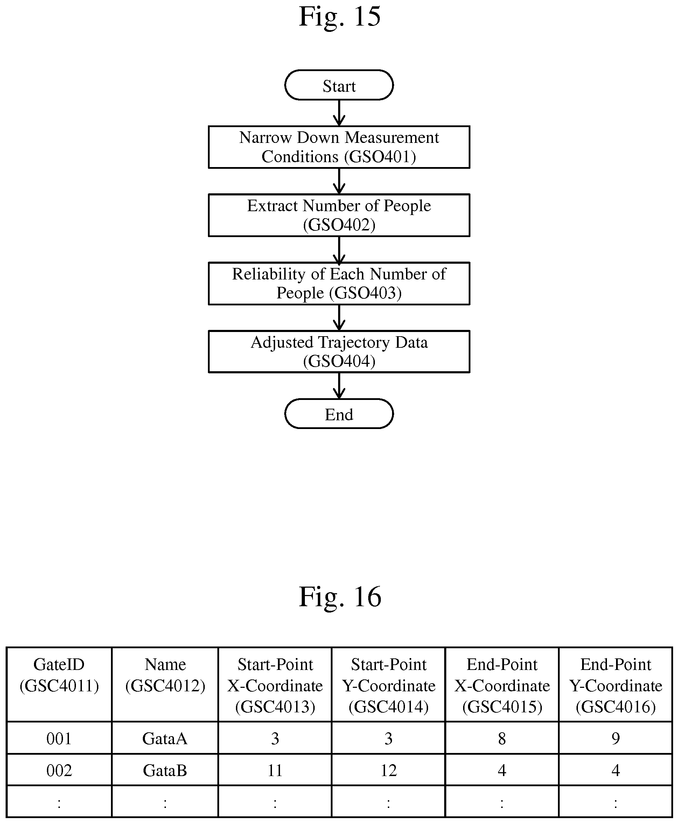

Fig. 15 is a flowchart for illustrating a reliable number-of-people and trajectory extraction process executed by the reliable number-of-people and trajectory extraction unit (GSO 4) of the number-of-people and trajectory extraction system (GSO). In the reliable number-of-people and trajectory extraction process described below, the reliability is determined by comparing the coordinates of a trajectory extracted under a given environment with the results of measurement obtained under a plurality of environments, so that a highly accurate trajectory can be determined.

### (i) Step GSO 401: process of narrowing down measurement conditions

The reliable number-of-people and trajectory extraction unit (GSO 4) selects a measurement condition in accordance with the trajectory data (see Fig. 10) from among a number of measurement conditions (see Fig. 7). Specifically, the reliable number-of-people and trajectory extraction unit (GSO 4) determines the trajectory extraction area ID (GSO 1041) as a measurement target from the trajectory coordinates (the start-point X-coordinate (GSO 1075) and the start-point Y-coordinate (GSO 1076)) of the primary key (GSO 1072) in the trajectory data (GSO 107) and from the trajectory extraction area correspondence table (GSO 104), and narrows down the candidate measurement conditions in the measurement condition list (GSO 105). Then, the reliable number-of-people and trajectory extraction unit (GSO 4) stores the results in the measurement condition candidate list (GSO 108) (see Fig. 11).

### (ii) Step GSO 402: process of extracting the number of people

The reliable number-of-people and trajectory extraction unit (GSO 4) calculates the number of people from each of the plurality of candidate measurement conditions. Specifically, the reliable number-of-people and trajectory extraction unit (GSO 4) extracts data corresponding to the measurement condition candidate list (GSO 108) from the trajectory data (GSO 107), and extracts the number of people for each measurement condition. Then, the reliable number-of-people and trajectory extraction unit (GSO 4) stores the results in the list (GSO 109) of the number of measured people for each measurement condition.

### (iii) Step GSO 403: process of calculating the reliability of each number of people

The reliable number-of-people and trajectory extraction unit (GSO 4) determines the reliability of each number of people using information on the number of people determined under a plurality of candidate measurement conditions (the number of people extracted in step GSO 402). Specifically, the reliable number-of-people and trajectory extraction unit (GSO 4) votes for the measurement conditions that indicate the same number of people in the list (GSO 109) of the number of measured people for each measurement condition, so as to extract the reliability of each number of people. That is, for all types of information on the detected "number of people" (for example, 1 person, 2 people, and 3 people, ...), the percentage of each "number of people" (for example, 1 person: 70%, 2 people: 20%, 3 people: 10%) is calculated. Then, the reliable number-of-people and trajectory extraction unit (GSO 4) stores the results in the list (GSO 110) of the number of people for each reliability (see Fig. 13).

### (iv) Step GSO 404: process of generating adjusted trajectory data

The reliable number-of-people and trajectory extraction unit (GSO 4) generates trajectory data using the most reliable measurement result (GSO 1103) from the list (GSO 110) of the number of people for each reliability (see Fig. 13). Accordingly, highly reliable information is obtained. Then, the reliable number-of-people and trajectory extraction unit (GSO 4) stores the result in the adjusted trajectory data (GSO 111) (see Fig. 14).

### <Example of a gate list>

Fig. 16 is a chart illustrating an example of a gate list (GSC 401) in accordance with this embodiment. The gate list (GSC 401) is information indicating the position of each gate used to determine the number of people who have passed through the gate that should be displayed on the display unit (GSC 2).

The gate list (GSC 401) includes, as the constituent information, the gate ID (GSC 4011), the name (GSC 4012), the start-point X-coordinate (GSC 4013), the start-point Y-coordinate (GSC 4014), the end-point X-coordinate (GSC 4015), and the end-point Y-coordinate (GSC 4016).

The gate ID (GSC 4011) is identification information for identifying each gate. The name (GSC 4012) is the name of the gate ID (GSC 4011).

The position of a gate can be represented by four coordinates. Therefore, the position of each gate is identified by the start-point X-coordinate (GSC 4013), the end-point X-coordinate (GSC 4015), the start-point Y-coordinate (GSC 4014), and the end-point Y-coordinate (GSC 4016).

Data on the gate list (GSC 401) is stored in the database (GSC 4). In addition, the gate list (GSC 401) may have added thereto information related to the gates, if any.

### <Example of a display time designation list>

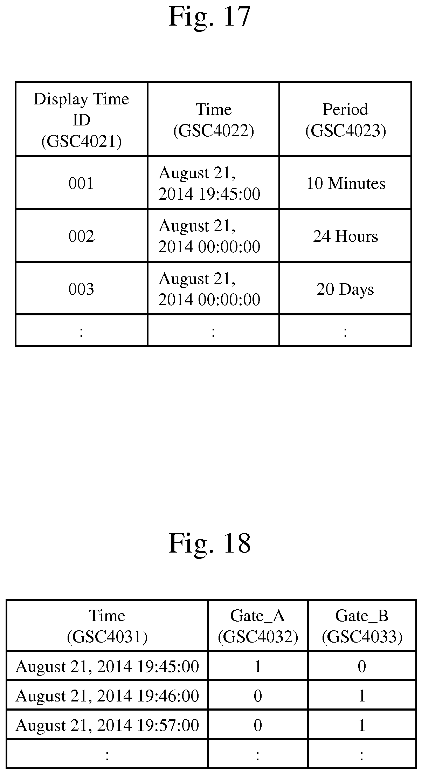

Fig. 17 is a chart illustrating an example of a display time designation list (GSC 402) in accordance with this embodiment. The display time designation list (GSC 402) is information indicating the time used to designate the period of visualization that should be displayed on the display unit (GSC 2).

The display time designation list (GSC 402) includes, as the constituent information, the display time ID (GSC 4021), the time (GSC 4022), and the period (GSC 4023).

The display time ID (GSC 4021) is identification information for identifying the display start time and the display period of a target. The time (GSC 4022) is information indicating the time when display of the target was started. The period (GSC 4023) is information indicating the period of visualization from the time when display was started.

It should be noted that data on the display time designation list (GSC 402) is stored in the database (GSC 4). In addition, the display time designation list (GSC 402) may have added thereto information related to the designation of the time, if any.

### <Example of a gate passage table>

Fig. 18 is a chart illustrating an example of a gate passage table (GSC 403) in accordance with this embodiment. The gate passage table (GSC 403) is information indicating data on each gate through which a person/people has/have passed as well as the time of the passage, which is used to display the number of people who have passed through each gate. The number of people who have passed through each gate is counted from the adjusted trajectory data (GSO 111) (see Fig. 14) and the gate list (GSC 401) (see Fig. 16), and the number of people who have passed through each gate as well as the time of the passage is stored in the gate passage table (GSC 403).

The gate passage table (GSC 403) includes, as the constituent information, the time (GSC 4031), the gate_A (GSC 4032), and the gate_B (GSC 4033).

The time (GSC 4031) indicates the time when an object (person) passed through a target gate. The gate_A (GSC 4032) indicates the number of people who passed through the gate_A at the time (GSC 4031). The gate_B (GSC 4033) indicates the number of people who passed through the gate_B at the time (GSC 4031).

It should be noted that data on the gate passage table (GSC 403) is stored in the database (GSC 4). In addition, the gate passage table (GSC 403) may have added thereto data related to the passage of people through each gate, if any.

### <Example of a base station reliability list>

Fig. 19 is a chart illustrating an example of a base station reliability list (GSC 404) in accordance with this embodiment. Whether base stations (BS) have troubles or not can be grasped by counting base stations used for analysis with high reliability. The base station reliability list (GSC 404) is a list indicating if each base station has been used as a base station (BS) used for analysis of the highest reliability rank or as a base station (BS) used for analysis of the lowest reliability rank.

The base station reliability list (GSC 404) includes, as the constituent information, the time (GSC 4041), high-reliability base stations (GSC 4042), and low-reliability base stations (GSC 4043).

The time (GSC 4041) indicates the time used as the time (GSO 1101) (see Fig. 13).

The high-reliability base stations (GSC 4042) indicate information on base stations used for analysis of the highest reliability rank (GSO 1103). The high-reliability base stations (GSC 4042) are determined as follows. That is, first, measurement conditions used for analysis of the highest reliability rank (GSO 1103) are identified from the measurement condition ID list (GSO 11033) (see Fig. 13). Next, the measurement conditions are checked against the measurement condition list (GSO 105) (see Fig. 7) so that information on the corresponding effective base station IDs (GSO 1059) is acquired. Then, voting for base stations with the base station IDs can determine high-reliability base stations. In the base station reliability list (GSC 404), BS-ID 01 (GSC 40421), BS-ID 02 (GSC 40422), BS-ID 03 (GSC 40423), and ... are listed as the high-reliability base stations (GSC 4042), and the number of appearances of each base station when the highest reliability rank (GSO 1103) was obtained is indicated.

The low-reliability base stations (GSC 4043) indicate information on base stations used for analysis of the lowest reliability rank. The low-reliability base stations (GSC 4043) can be determined similarly to the high-reliability base stations (GSC 4042). In the base station reliability list (GSC 404), BS-ID 01 (GSC 40431), BS-ID 02 (GSC 40432), BS-ID 03 (GSC 40433), and ... are listed, and the number of appearances of each base station when the lowest reliability rank was obtained is indicated.

It should be noted that data on the base station reliability list (GSC 404) is stored in the database (GSC 4). In addition, the base station reliability list (GSC 404) may have added thereto data related to the reliability of the base stations, if any.

### <Number-of-people and trajectory display process>

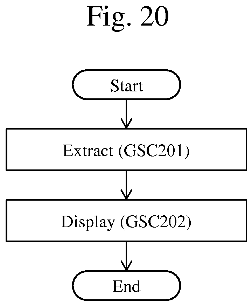

Fig. 20 is a flowchart for illustrating a number-of-people and trajectory display process executed by the display unit (GSC 2) of the number-of-people and trajectory display system (GSC) in accordance with this embodiment.

### (i) Step GSC 201: extraction process

The display unit (GSC 2) performs a process of extracting data that is needed for display (GSC 202) from the database (GSC 4) and the database (GSO 1). In the extraction (GSC 201) process, the number of people who have passed through each gate and the base station reliability, in particular, are determined.

### (i-1) The number of people who have passed through each gate

The display unit (GSC 2) determines the number of people who have passed through each gate from the adjusted trajectory data (GSO 111) (see Fig. 14) and the gate list (GSC 401) (see Fig. 16). Specifically, a trajectory, which is identified from the start-point X-coordinate (GSO 1113), the start-point Y-coordinate (GSO 1114), the end-point X-coordinate (GSO 1116), and the end-point Y-coordinate (GSO 1117) of the adjusted trajectory data (GSO 111) is checked against the position of each gate, which is identified from the start-point X-coordinate (GSC 4013), the start-point Y-coordinate (GSC 4014), the end-point X-coordinate (GSC 4015), and the end-point Y-coordinate (GSC 4016) of the gate, so that the number of people who have passed through each gate is determined. The results are stored in the gate passage table (GSC 403).

### (i-2) Base station reliability (reliability of each base station)

The display unit (GSC 2) determines the base station reliability from the list (GSO 110) of the number of people for each reliability (see Fig. 13) and the measurement condition list (GSO 105) (see Fig. 7). Specifically, measurement conditions used for each of analysis of the highest reliability rank (GSO 1103) and analysis of the lowest reliability rank are identified from the measurement condition ID list (GSO 11033) (see Fig. 13). Next, the measurement conditions are checked against the measurement condition list (GSO 105) (see Fig. 7) so that information on the effective base station IDs (GSO 1059) corresponding to each rank is acquired. Then, the number of base stations with the base station IDs corresponding to each rank is counted (voted) so that information on each of the high-reliability base stations and low-reliability base stations can be obtained. The results of the base station reliability are stored in the base station reliability list (GSC 404).

### (ii) Step GSC 202: display process

The display unit (GSC 2) counts data on the basis of the time designated in the display time designation list (GSC 402), and displays it. In particular, in the display process (GSC 202), the trajectory of a person, the number of people who have passed through each gate, and the base station reliability are displayed.

### (ii-1) Display of the trajectory of a person

The display unit (GSC 2) determines the trajectory of a person using the adjusted trajectory data (GSO 111) (see Fig. 14) and the display time designation list (GSC 402) (see Fig. 17), and draws it. Specifically, the display unit (GSC 2) checks the start-point time (GSO 1112) and the end-point time (GSO 1115) of the adjusted trajectory data (GSO 111) against the designated period identified from the display time designation list (GSO 111), so as to extract a trajectory included in the designated period and display it.

### (ii-2) Display of the number of people who have passed through each gate

The display unit (GSC 2) determines the number of people who have passed through each gate using the display time designation list (GSC 402) (see Fig. 17) and the gate passage table (GSC 403) (see Fig. 18), and draws it. Specifically, the display unit (GSC 2) compares the designated time identified from the display time designation list (GSC 402) with the time (GSC 4031) of the gate passage table (GSC 403), so as to calculate the number of people who have passed through each gate at the time (GSC 4031) included in the designated period and display it.

### (ii-3) Display of base station reliability

The display unit (GSC 2) determines, using the display time designation list (GSC 402) (see Fig. 17) and the base station reliability list (GSC 404) (see Fig. 19), the base station reliability in the period, and draws it. More specifically, the display unit (GSC 2) checks the designated period identified from the display time designation list (GSC 402) against the time (GSC 4041) in the base station reliability list (GSC 404), so as to determine information on the reliability of each base station at the time (GSC 4041) included in the designated period. In such a case, the reliability of the base station may be output (displayed) as being high if it is determined to be high even once in the designated period (if it is counted even once in Fig. 19).

It should be noted that since data determined from the database (GSC 4) and the database (GSO 1) can be displayed, data other than such data may also be extracted and displayed.

### <Modified example>

In the aforementioned embodiment, the number of people is determined based on measurement data obtained from at least some of measurement conditions, using measurement conditions including a variety of combinations of physically different base stations (BS) (effective base station IDs included therein differ depending on measurement conditions; measurable areas differ depending on combinations). In the present disclosure, not only such combinations of physically different base stations (BS) but also combinations of base stations (BS) with different system start times may be used.

For example, a plurality of (*N*) measurement processing units (GSO 2) and a plurality of (*N*) trajectory coordinate extraction units (GSO 3) are prepared in the number-of-people and trajectory extraction system (GSO) of the mobile object measurement system (GS). Then, the mobile object measurement system (GS) receives data (*N* sets of data) measured by each base station (BS) at intervals of a predetermined time (for example, 5 seconds) so that the *N* sets of data are processed by the *N* measurement processing units (GSO 2) and the *N* trajectory coordinate extraction units (GSO 3). Further, the reliable number-of-people and trajectory extraction unit (GSO 4) performs a process of voting for the number of people obtained from the *N* sets of data (each set of the measurement data is independent from each other), and then outputs the number of people with the highest percentage as the final number of people (a reliable result).

As described above, the final number of people is determined not based on the conditions of the physical arrangement of the base stations but by using measurement results involving a time lag, so that there is no possibility that a single measurement result will be taken over to the following measurement results. Therefore, the number of people can be counted with higher accuracy.

### <Conclusion>

(i) In this embodiment, a plurality of combinations of measurement devices (measurement conditions) configured using at least some of a plurality of measurement devices (base stations (BS)) is determined in advance. Then, on the basis of data measured in accordance with each of at least some of the plurality of combinations (some of the measurement conditions), the mobile object measurement system (GS) calculates, as a candidate number of people, the number of people corresponding to each of the relevant measurement conditions, and identifies the final number of people on the basis of the candidate number of people. Specifically, a voting process is performed on the candidate numbers of people, so that a candidate number of people with the highest percentage is determined to be the final number of people. Further, the thus determined final number of people is output. Accordingly, the number of people who are present in a predetermined area can be counted with high accuracy.
   In order to calculate the candidate number of people, the position of an object is calculated on the basis of measurement data from a plurality of measurement devices, and a combination of measurement devices that can measure the position is identified, so that the candidate number of people for the combination is calculated. Usually, a plurality of such combinations is identified. The combinations will change as a person (people) move(s). Therefore, unlike a case where the number of people is counted from measurement data that is obtained from only the conventional stationary arrangement pattern of base stations, there is no possibility that an error that has occurred once will propagate to the following measurements. Therefore, the number of people can be identified accurately.
   In response to an instruction for display that is input by a manager with the use of a client, which is an instruction including information on the period and place in which the number of people should be counted, the mobile object measurement system in accordance with this embodiment displays the final number of people in the period and place on the screen. Accordingly, the manager can know the correct number of people in the desired place and period.
   Further, the mobile object measurement system determines base stations, which are included in measurement conditions that provide the highest percentage of the candidate number of people, as high-reliability base stations, and displays on the screen the final number of people as well as information on the base stations determined as the high-reliability base stations (base station reliability that indicates, for example, the proportion of high-reliability base stations or information indicating whether the reliability of each base station is high or not). Accordingly, how reliable the displayed information on the number of people is can be estimated from information on the base station reliability.
   In addition, the mobile object measurement system calculates the trajectory of a person (the start-point coordinates and the end-point coordinates in a predetermined period) on the basis of measurement data from base stations, and displays the trajectory on a map showing a target area where the number of people should be counted. Accordingly, the number of people in the area as well as the movement of each person can be known.
(ii) The present disclosure can also be realized by a program code of software that implements the function of the embodiment. In such a case, a storage medium having recorded thereon the program code is provided to a system or an apparatus, and a computer (or a CPU or a MPU) in the system or the apparatus reads the program code stored in the storage medium. In this case, the program code itself read from the storage medium implements the function of the aforementioned embodiment, and the program code itself and the storage medium having recorded thereon the program code constitute the present disclosure. As the storage medium for supplying such a program code, for example, a flexible disk, CD-ROM, DVD-ROM, a hard disk, an optical disc, a magneto-optical disc, CD-R, a magnetic tape, a nonvolatile memory card, ROM, or the like is used.

Further, based on an instruction of the program code, an OS (operating system) running on the computer or the like may perform some or all of actual processes, and the function of the aforementioned embodiment may be implemented by those processes. Furthermore, after the program code read from the storage medium is written to the memory in the computer, the CPU or the like of the computer may, based on the instruction of the program code, perform some or all of the actual processes, and the function of the aforementioned embodiment may be implemented by those processes.

Moreover, the program code of the software that implements the function of the embodiment may be distributed via a network, and thereby stored in storage means such as the hard disk or the memory in the system or the apparatus, or the storage medium such as CD-RW or CD-R, and at the point of use, the computer (or the CPU or the MPU) in the system or the apparatus may read the program code stored in the storage means or the storage medium and execute the program code.

Finally, it should be appreciated that the process and technology described herein may be implemented substantially by any suitable combination of components without being related to a specific device. Further, a variety of types of general-purpose devices can be used in accordance with the procedures described herein. It may be found to be advantageous to construct a dedicated device to execute the steps of the method described herein. In addition, a variety of inventions can be formed by appropriately combining a plurality of components disclosed in the embodiment. For example, some of the components shown in the embodiment may be removed. Further, the components in different embodiments may be appropriately combined. Although the present disclosure has been described with reference to specific examples, such examples are shown not for limiting purposes but for explanation purposes in all aspects. One of ordinary skill in the art may appreciate that there are a number of combinations of hardware, software, and firmware that are suitable for implementing the present disclosure. For example, the software described herein may be implemented by an assembler or a wide range of programs or script languages, such as C/C++, perl, Shell, PHP, or Java (registered trademark).

Further, in the aforementioned embodiment, the control lines and information lines represent those that are considered to be necessary for the description, and do not necessarily represent all of the control lines and information lines that are necessary for a product. Therefore, almost all of the elements may be mutually connected.

In addition, other implementations of the present disclosure are apparent to one of ordinary skill in the art from consideration of the specification and the embodiment of the present disclosure disclosed herein. A variety of configurations and/or components in the embodiment described herein may be used either alone or in combination in a computer or a storage system having a data management function. The specification and specific examples herein are merely typical examples, and the spirit and scope of the present disclosure are represented by the appended claims that follow.

### Reference Signs List

- US: Operator
- NW: Network
- BS: Base station
- GS: Mobile object measurement system
- GSO: Number-of-people and trajectory extraction system
- GSC: Number-of-people and trajectory display system
- GSA: Business application

## Claims

1. A mobile object measurement system for determining the number of people in a measurement area, comprising:
a storage device configured to store various programs for determining the number of people, and
a processor configured to read the various programs from the storage device and process measurement data received from a plurality of measurement devices arranged in the area, thereby determining the number of people,
wherein:
a plurality of combinations of measurement devices is determined in advance, each combination being configured with at least some of the plurality of measurement devices, and
the processor is configured to execute
a process of calculating, as a candidate number of people, the number of people corresponding to each of the at least some of the combinations, on the basis of measurement data from each measurement device included in the at least some of the plurality of combinations,
a process of determining a final number of people on the basis of the candidate number of people, and
a process of outputting the final number of people.

2. The mobile object measurement system according to claim 1, wherein the processor is configured to perform, in the process of determining the final number of people, a process of voting for the candidate number of people obtained from each combination, and determine a candidate number of people with the highest percentage as the final number of people.

3. The mobile object measurement system according to claim 1, wherein the processor is configured to perform, in the process of calculating the candidate number of people,
a process of calculating a position of an object on the basis of the measurement data from the plurality of measurement devices,
a process of determining a combination of measurement devices that can measure the calculated position, and
a process of calculating the candidate number of people on the basis of the determined combination.

4. The mobile object measurement system according to claim 2, further comprising a processor configured to display on a screen of a display device information on the final number of people in accordance with a program for displaying the information,
wherein:
the processor for display is configured to, in response to an input instruction including information on a period and a place in which the number of people is to be counted, display on the screen the final number of people in the period and the place.

5. The mobile object measurement system according to claim 4,
wherein:
the processor configured to determine the number of people is configured to determine measurement devices, which are included in at least one of the combinations that provides the candidate number of people with the highest percentage, as high-reliability measurement devices, and
the processor for display is configured to display on the screen the final number of people and information about the measurement devices determined as the high-reliability measurement devices.

6. The mobile object measurement system according to claim 4,
wherein:
the processor configured to determine the number of people is configured to calculate a trajectory of a person on the basis of measurement data from at least one of the combinations, and
the processor for display is configured to display a map representing the area on the screen and display the trajectory on the map.

7. The mobile object measurement system according to claim 2, wherein the processor is configured to, in response to an input instruction including information on a period and a place in which the number of people is to be counted, display on a screen of a display device the final number of people in the period and the place.

8. The mobile object measurement system according to claim 7, wherein the processor is further configured to perform
a process of determining measurement devices, which are included in at least one of the combinations that provides the candidate number of people with the highest percentage, as high-reliability measurement devices, and
a process of displaying on the screen the final number of people and information about the measurement devices determined as the high-reliability measurement devices.

9. The mobile object measurement system according to claim 7, wherein the processor is configured to perform
a process of calculating a trajectory of a person on the basis of measurement data from the at least one of the combinations, and
a process of displaying a map representing the area on the screen and displaying the trajectory on the map.

10. A method of determining the number of people in a measurement area, comprising:
reading, with a processor, a plurality of combinations of measurement devices determined in advance, from a storage device, each combination being configured with at least some of a plurality of measurement devices;
determining, with the processor, the number of people corresponding to each of the at least some of the combinations, as a candidate number of people, on the basis of measurement data from each measurement device included in the at least some of the plurality of combinations;
determining, with the processor, a final number of people on the basis of the candidate number of people; and
outputting, with the processor, the final number of people.

11. The method according to claim 10, wherein the determining the final number of people includes performing, with the processor, a process of voting for the candidate number of people obtained from each combination, and determining, with the processor, a candidate number of people with the highest percentage as the final number of people.

12. The method according to claim 10, wherein the calculating the candidate number of people includes
calculating, with the processor, a position of an object on the basis of measurement data from the plurality of measurement devices,
determining, with the processor, a combination of measurement devices that can measure the calculated position, and
calculating, with the processor, the candidate number of people on the basis of the determined combination.

13. The method according to claim 11, further comprising, in response to an input instruction including information on a period and a place in which the number of people is to be counted, displaying, with the processor, the final number of people in the period and the place on a screen of a display device.

14. The method according to claim 13, further comprising:
calculating, with the processor, a trajectory of a person on the basis of measurement data from at least one of the combinations, and
displaying, with the processor, a map representing the area on the screen and displaying the trajectory on the map.
